# EUROPÄISCHE PATENTSCHRIFT

(11) **EP 1 382 757 B1**
(45) Veröffentlichungstag und Bekanntmachung des Hinweises auf die Patenterteilung: **01.08.2007**
(21) Anmeldenummer: 03012188.3
(22) Anmeldetag: 04.06.2003
(51) Int. Cl.: E03C 1/042, E03D 1/012

(54) **Installationseinrichtung für Sanitärelemente**
Sanitary installation unit
Bloc d'installation sanitaire

(30) Priorität: 18.07.2002 DE 10233858
(43) Veröffentlichungstag der Anmeldung: 21.01.2004
(73) Patentinhaber: Hansgrohe AG, 77761 Schiltach (DE)
(72) Erfinder: Schönweger, Alois, 77761 Schiltach (DE)
(74) Vertreter: Patentanwälte Ruff, Wilhelm, Beier, Dauster & Partner

(56) Entgegenhaltungen:
- US-A- 4 989 633
- US-A- 5 368 065
- US-A- 5 934 032

## Beschreibung

Die Erfindung geht aus von einem Unterputzeinbaukasten für Sanitärarmaturen. Solche Einbaukästen sind bekannt. Sie dienen dazu, Sanitärarmaturen oder sonstige Sanitärelemente innerhalb eines Mauerdurchbruchs, einer Vertiefung in einer Wand oder dergleichen unterzubringen. Insbesondere bei Einbauwänden und Vorwandsystemen haben sich solche Einbaukästen bewährt.

Die Einbaukästen, die in der Regel aus Kunststoff bestehen, werden in die Vertiefung oder den Durchbruch eingesetzt. Sie haben eine Größe, die so bemessen ist, dass der vordere Rand des Einbaukastens über die maximale Wanddicke vorspringt. Es gibt auch Fälle , wo der Kasten zu kurz ist. Nach Fertigstellung der Verfliesung wird dann vom Installateur der noch vorstehende Teil mit einem Messer oder einem Schneidgerät abgeschnitten oder es wird eine Verlängerung angebracht. Dann reicht der vorderen Rand des Unterputzkastens bis zur Vorderseite der Wand.

Dies setzt es allerdings voraus, dass ein sorgfältig arbeitender Installateur diese Tätigkeit vornimmt. Der Zeitaufwand für ein sauberes Abtrennen ist beachtlich.

Bei einem bekannten Unterputzeinbaukasten für Sanitärarmaturen (EP 0844340) ist an dem eigentlichen Kasten ein Flansch angebracht, der verschiebbar ist. Nach vollständiger Montage soll der Flansch so verschoben werden, dass er mit dem Spalt zwischen zwei Verkleidungselementen fluchtet. Eine Haltefunktion hat dieser Flansch nicht. Der Kasten muss nach der Verfliesung an der Vorderseite abgeschnitten werden.

Der Erfindung liegt die Aufgabe zu Grunde, einen Einbaukasten dieser Art zu schaffen, der auch bei einer stärker rationalisierten Bauweise, insbesondere bei Fertighäusern, Vorteile bei der Schnelligkeit und Genauigkeit der Montage bietet.

Zur Lösung dieser Aufgabe schlägt die Erfindung eine Installationseinrichtung mit den Merkmalen des Anspruchs 1 und/oder 2 vor. Weiterbildungen der Erfindung sind Gegenstand von Unteransprüchen.

Die bekannten Unterputzkästen werden im Regelfall an ihrem Boden befestigt. Es gibt ebenfalls Unterputzkästen, die einen festen einstückig angeformten Flansch haben. Auch bei diesen besteht das Problem, dass der überstehende Rand nachträglich abgelängt werden muss.

Statt dessen ist der Flansch bei der Installationseinrichtung nach der Erfindung ein Teil, das an dem Unterputzkasten in unterschiedlichen Abständen von der vorderen Öffnung angebracht werden kann. Damit lässt sich beispielsweise im Fertighausbau oder auch bei einer rationelleren Fertigung normaler Häuser der Abstand zwischen dem Flansch und der Vorderseite des Gehäuses auf die später anzutreffenden Einbauverhältnisse einstellen bzw. die Wandstärke ausgleichen. Bei einer Reihenbauweise kann dies mit geringem Aufwand bereits vor der Installation erfolgen, so dass am Einbauort kein sorgfältig arbeitender Monteur mehr vorhanden sein muss. Der Zeitaufwand an der Einbaustelle verringert sich.

Bei dem Flansch kann es sich um einzelne an dem Unterputzkasten anbringbare Teile handeln. Besonders sinnvoll ist es jedoch, wenn es sich bei dem Flansch um einen einteilig ausgebildeten Ring handelt, der also den Unterputzkasten längs seines gesamten Umfangs umgibt.

Nach der Erfindung ist vorgesehen, dass der Flansch mit den Außenseiten der Seitenwände des Unterputzkastens verbindbar ist.

Die Verbindung zwischen Flansch und Unterputzkasten kann auf unterschiedliche Weise geschehen, beispielsweise mit Hilfe von Befestigungsmitteln, Klammern oder dergleichen. Besonders sinnvoll ist es jedoch, wenn der Flansch direkt ohne weitere Hilfsmittel mit dem Unterputzkasten verbunden werden kann, so dass die Installationseinrichtung aus nur zwei Teilen zu bestehen braucht, nämlich dem Unterputzkasten und dem mit diesem verbindbaren Flansch.

Die Verbindung kann beispielsweise durch eine Verschraubung geschehen. Dies setzt voraus, dass der Unterputzkasten kreiszylindrisch ist, damit zwischen der Innenseite des Flanschs und der Außenseite des Kastens nur ein geringer Spaltabstand übrig bleibt.

Zur Verwirklichung der Verschraubungsmöglichkeit kann vorgesehen sein, dass die Außenseite der Seitenwände des Unterputzkastens und gegebenenfalls auch die Innenseite des Flanschs ein Gewinde aufweist. Es kann sich dabei um ein sehr feines Gewinde handeln, das sich bei der Herstellung des Unterputzkastens aus Kunststoff auch leicht mit herstellen lässt.

Um den Flansch nicht über eine weite Strecke verschrauben zu müssen, kann erfindungsgemäß vorgesehen sein, dass das Gewinde an mindestens einer Stelle des Umfangs bis auf mindestens den Gewindegrund unterbrochen ist, so dass der Ring an der Stelle der Unterbrechung zunächst aufgeschoben werden kann, bis etwa die richtige Stelle erreicht, worauf er dann weiter verschraubt wird.

Eine weitere Möglichkeit, wie der Flansch mit dem Unterputzkasten in der gewünschten Weise verbunden werden kann, besteht darin, dass zwischen dem Unterputzkasten und dem Flansch eine Bajonettverbindung oder auch mehrere Bajonettverbindungen vorgesehen sind. Auch hier kann durch entsprechende Gestaltung vorgesehen sein, dass der Ring an einer bestimmten Stelle auf den Kasten aufgeschoben wird, bis er etwa die richtige Stelle erreicht hat, worauf er dann durch Drehen in die Bajonettstellung gelangt.

Eine nochmals weitere Möglichkeit zur Verbindung des Flanschs mit dem Unterputzkasten kann darin bestehen, dass der Flansch mit Mitteln versehen ist, die in die Befestigungsösen eingreifen, die an dem Unterputzkasten vorhanden sind. Solche Befestigungsösen dienen dazu, den Unterputzkasten beispielsweise auf dem Boden einer Ausnehmung anzuschrauben. Die Benutzung dieser sowieso vorhandenen Einbauösen hat den Vorteil, dass ein Unterputzkasten für unterschiedliche Anbringungsarten verwendet werden kann.

Darüber hinaus sind diese Arten von Befestigungen auch dann möglich, wenn der Unterputzkasten keinen kreiszylindrischen Querschnitt aufweist.

In nochmaliger Weiterbildung der Erfindung kann vorgesehen sein, dass sich der Flansch von der Vorderseite des Unterputzkastens her mit diesem verbinden lässt.

Um bei einer Schraubverbindung oder einer sonstigen im Prinzip veränderbaren Verbindung in der einmal gewünschten Position eine Verriegelung vorzusehen, kann ein zusätzliches Verriegelungselement, beispielsweise eine Art Keil, vorgesehen sein.

Der Flansch dient nicht nur zur Befestigungen des Unterputzkastens an einer Vorbauwand, sondern kann auch dazu dienen, eine Dichtung aufzunehmen. Je nach Anwendungsfall lässt sich der Flansch an der Vorderseite der Wand oder an der Rückseite der Wand anlegen.

Weitere Merkmale, Einzelheiten und Vorzüge der Erfindung ergeben sich aus den Patentansprüchen und der Zusammenfassung, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
Figur 1 eine Seitenansicht einer ersten Ausführungsform eines Unterputzkastens mit bereits angebrachtem Flansch;
Figur 2 eine perspektivische Ansicht des Unterputzkastens der Figur 1 bei abgenommenem Flansch;
Figur 3 eine perspektivische Ansicht des Flansches der Ausführungsform nach Figur 1;
Figur 4 eine perspektivische Ansicht einer zweiten Ausführungsform;
Figur 5 eine Seitenansicht der Ausführungsform nach Figur 4;
Figur 6 eine der Figur 1 entsprechende Darstellung einer dritten Ausführungsform;
Figur 7 eine perspektivische Ansicht des Flansches der Ausführungsform nach Figur 6;
Figur 8 eine perspektivische Ansicht des Unterputzkastens der Ausführungsform nach Figur 6,
Figur 9 einen Detailschnitt.

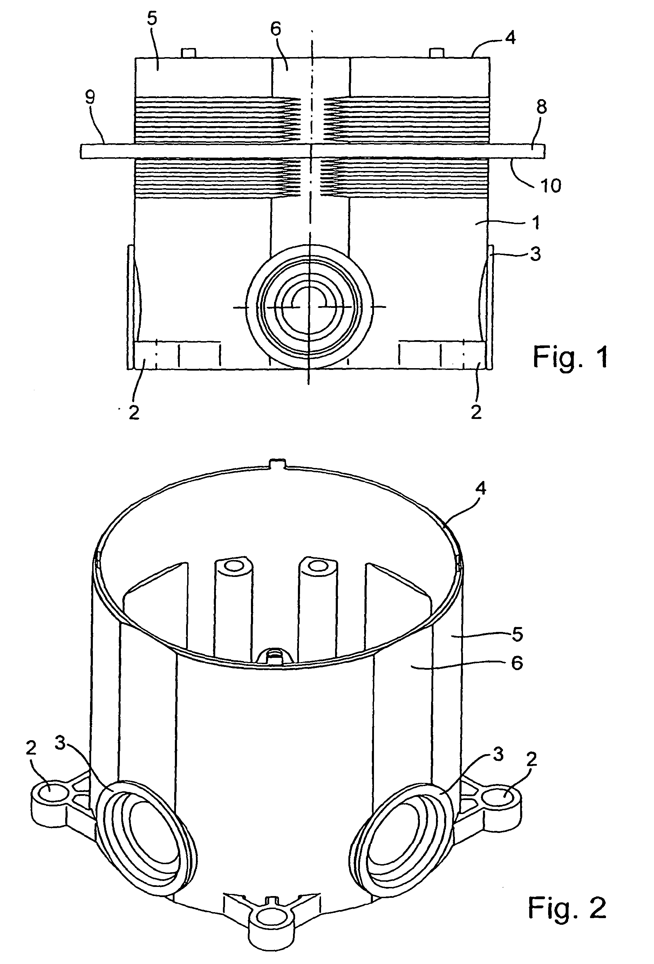

Figur 1 zeigt in einer Seitenansicht einen aus Kunststoff bestehenden Unterputzkasten 1 mit einem kreiszylindrischen Querschnitt, der nur geringfügig durch zusätzliche Bauteile unterbrochen ist. In dem in Figur 1 unteren Bereich ist der Unterputzkasten 1 durch einen Boden abgeschlossen, so dass der Unterputzkasten topfartig ausgebildet ist. Die Orientierung des Unterputzkastens ist so gedacht, dass seine in Figur 1 oben zu sehende offene Seite die Vorderseite des Kastens an der Wand bildet.

Im Bereich des Bodens sind an der Außenseite der Wände des Unterputzkastens 1 vorstehende Ösen 2 angeformt, die dazu dienen können, den Unterputzkasten an einer Wand direkt oder mit Abstand anzuschrauben. In den Unterputzkasten 1 führen insgesamt vier Anschlüsse 3, die radiale Öffnungen bilden. Durch diese Öffnungen 3 werden die Leitungen geführt.

Im Inneren des Unterputzkastens, siehe Figur 2, sind unterschiedliche Möglichkeiten zur Anbringung der Sanitärelemente vorgesehen, die in dem Unterputzkasten untergebracht werden sollen. Die Anbringungsösen 2 sind mittig zwischen den Anschlussöffnungen 3 für die Leitungen angeordnet.

In seinem von dem Rand 4 der offenen Vorderseite ausgehenden Bereich enthält der Unterputzkasten hinter einem glatten Bereich von beispielsweise 3 cm an den Außenseiten seiner Seitenwände ein Gewinde 5. Die Länge des Gewindebereichs entspricht etwa der halben Höhe des Unterputzkastens. Das Gewinde 5 ist an mehreren Stellen den Umfang entlang unterbrochen, wobei eine solche Unterbrechungsstelle 6 axial verläuft. Die Unterbrechungsstellen 6 sind so ausgebildet, dass dort ein Bereich vorhanden ist, dessen Abstand von der Achse des Unterputzkastens 1 höchstens so groß ist, wie der Abstand des Gewindegrunds des Gewindes 5 von der Achse des Unterputzkastens. Dies bedeutet, dass an diesen Stellen kein Gewinde vorhanden ist, während die restlichen Gewindegänge auf einer Schraubenlinie liegen.

Die Stellen, an denen das Gewinde unterbrochen ist, fluchten mit den Stellen der Anschlüsse 3.

Auf das Gewinde 5 ist ein Ring 7 aufgeschraubt, der dadurch einen Flansch 8 bildet. Der Flansch 8 weist eine ebene Vorderseite 9 und eine parallel zu dieser verlaufende ebene Rückseite 10 auf. Durch das Aufschrauben des Rings 7 auf das Gewinde 5 des Unterputzkastens kann der Abstand zwischen der Vorderseite 9 des Flanschs 8 und der Ebene des Rands 4 der Vorderseite des Unterputzkastens 1 verändert werden.

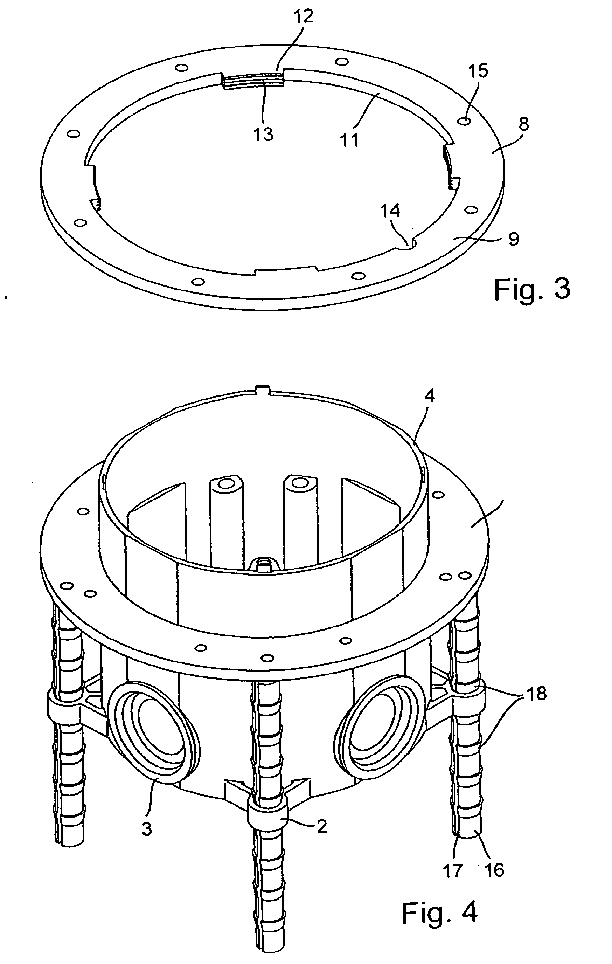

Das zugehörige den Flansch 8 bildende Ringelement ist in Figur 3 perspektivisch dargestellt. Man kann der Figur 3 entnehmen, dass der Flansch 8 kreisringförmig ist und an seiner Innenseite 11 insgesamt vier Vorsprünge 12 mit einem Innengewinde 13 aufweist. Die Umfangslänge der Vorsprünge 12 entspricht der Umfangslänge der gewindefreien Stellen 6 der Außenseite des Unterputzkastens. Der Ring kann zunächst so orientiert werden, dass die Vorsprünge 12 an den gewindefreien Stellen 6 orientiert sind. Dann kann der Ring parallel zu sich selbst an die entsprechende Stelle geschoben werden, wo er angebracht werden sollen. Durch kurzes Verdrehen greifen die Gewinde des Vorsprungs 12 und des Unterputzkastens 1 ineinander ein, so dass jetzt weiter geschraubt werden kann. Auf diese Weise lässt sich eine Verstellung auch sehr schnell durch führen, trotz des feinen Gewindes.

Um den Flansch in seiner einmal festgelegten Stellung auch verriegeln zu können, ist an der Innenseite des Rings 7 eine kreisrunde Kerbe 14 ausgebildet. In diese Kerbe kann ein Keil eingeschlagen werden, der ein weiteres Verdrehen des Flanschs 8 und damit eine Veränderung des Abstand zwischen dem Rand 4 und dem Flansch 8 verhindert.

Das den Flansch 8 bildende Ringelement 7 weist durchgehende Löcher 15 auf, die dazu dienen können, mit Hilfe des Flanschs 8 den Unterputzkasten 1 an einer Trockenbauwand oder Vorbauwand anzuschrauben. Dies kann sowohl von vorne als auch von hinten geschehen.

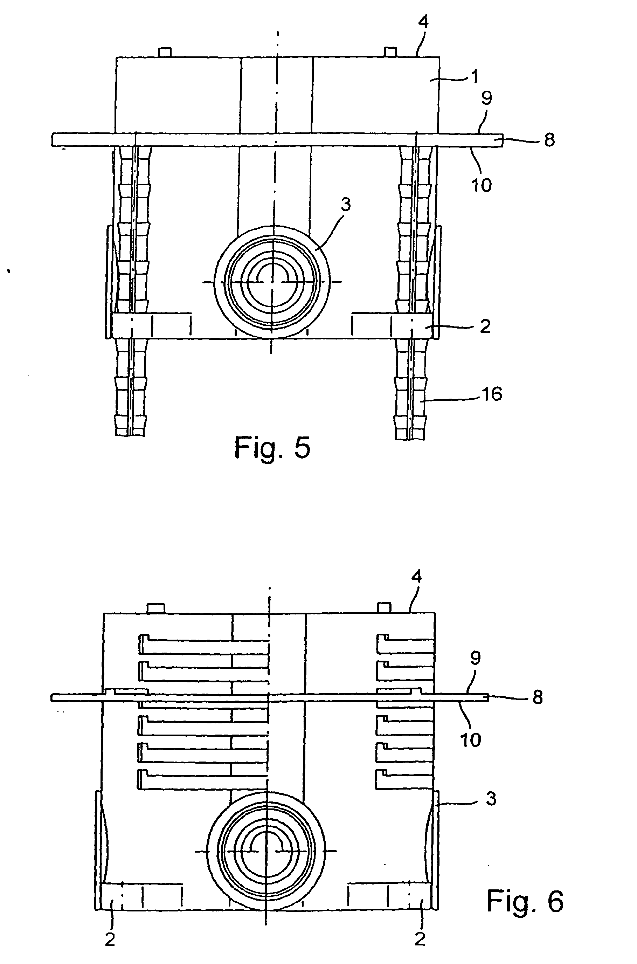

Figur 4 zeigt eine zweite Ausführungsform, wobei die Darstellung der Figur 4 den Unterputzkasten mit schon befestigtem Flansch 8 zeigt. Der Flansch 8 ist wieder als Ringelement ausgebildet wie bei der Ausführungsform nach Figur 1 bis 3, wobei er jedoch diesmal an seiner Innenseite 11 keine mit Gewinden versehene Vorsprünge aufweist, sondern glatt ausgebildet ist. An der dem Rand 4 der offenen Vorderseite abgewandten Rückseite 10 ist der Flansch 8 mit vier dübelartigen Ansätzen 16 versehen. Diese Ansätze 16 sind längs geschlitzt, weisen also einen sich in Längsrichtung erstreckenden Schlitz 17 auf. Darüber hinaus weist die Oberfläche der Ansätze 16 keilartige Ausbildungen 18 auf, die ein Einschieben in die Befestigungsösen 2 erleichtern, ein Herausziehen aber erschweren bzw. verhindern. Beim Einschieben führen die Keilflächen 18 dazu, dass die Ansätze unter Verengung des Schlitzes 17 zusammengedrückt werden, bis sie nach dem Durchschieben eines kreisförmigen Ansatzes 18 durch die Öse 2 wieder nach außen federn können. Bei dieser Ausführungsform braucht die Außenseite des Unterputzkastens 1 kein Gewinde aufzuweisen. Darüber hinaus ist diese Form nicht auf eine kreisrunde Querschnittsform beschränkt, da ja eine Verdrehung um die Achse des Unterputzkastens nicht mehr erforderlich ist. Zusätzlich ist auch eine Dreharretierung bei dieser Ausführungsform gegeben. Bei dieser in den Figuren 4 und 5 dargestellten Ausführungsform kann bei der Vormontage der überstehende Teil der Ansätze 16 abgeschnitten werden.

Figur 5 zeigt die entsprechende Seitenansicht, aus der sich ergibt, dass die Ansätze 16 mit ihren Schlitzen 17 eben deutlich über den Boden des Unterputzkastens vorstehen.

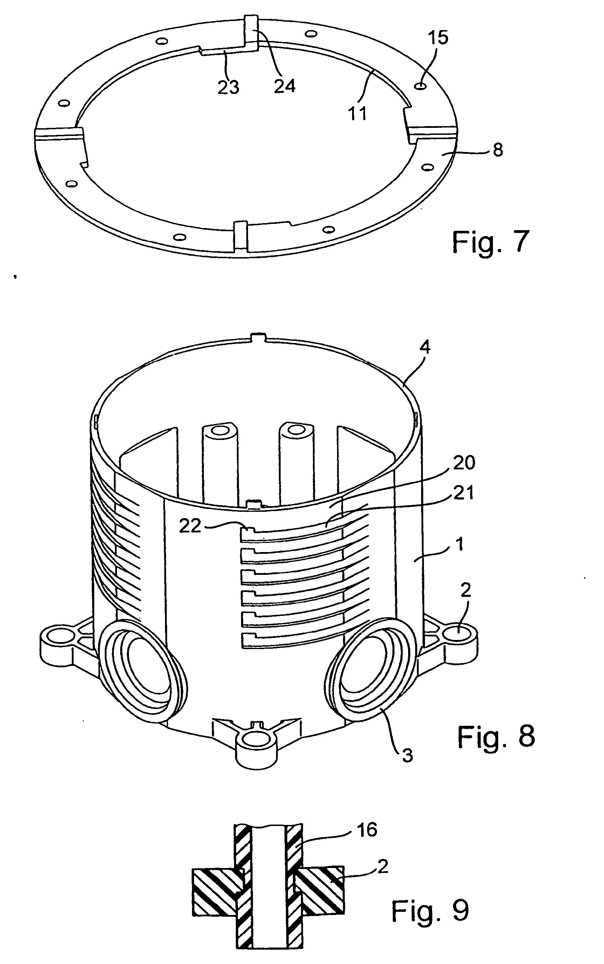

Die jetzt folgenden Figuren 6,7 und 8 gehören wieder zusammen zu einer weiteren Ausführungsform. An der Außenseite des Unterputzkastens sind in ihrem radialem Abstand von der Achse des Unterputzkastens nur geringfügig überstehende umlaufende Vorsprünge 20 ausgebildet, die zwischen sich ebenfalls umlaufende Nuten 21 bilden. Es gibt insgesamt vier solcher Stellen längs des Umfangs des Unterputzkastens 1. An dem im Uhrzeigersinn hinteren Ende der Nuten 21 ist eine Verbreiterung 22 der Vertiefung ausgebildet, die eine Verriegelung bilden kann. An der radialen Innenseite 11 des zugehörigen Flanschs 8, siehe Figur 7, sind über den Umfang verteilt vier Vorsprünge 23 ausgebildet, die etwa den Vorsprüngen 12 der Ausführungsform nach Figur 3 entsprechen. An dem einen Ende dieser Vorsprünge 23 ist eine Verdickung in Form einer radialen Rippe 24 gebildet. Der Flansch 8 der Figur 7 wird zunächst so orientiert, dass die Vorsprünge 23 an den Stellen zwischen den umlaufenden Vorsprüngen 29 orientiert sind. Anschließend wird der Flansch parallel zu sich auf den Unterputzkasten 1 aufgeschoben, bis er die richtige Orientierung erreicht hat. Dann wird durch Drehen im Uhrzeigersinn ein Eingreifen der Vorsprünge 23 in die Nuten 21 hergestellt, bis am Ende der Drehbewegung die Rippen 24 in die Verbreiterung 22 eingreifen. Die auf der Oberseite 9 des Flanschs 8 vorhandenen radialen Rippen 24 können zusätzlich noch dazu verwendet werden, das Verdrehen zu erleichtern. Ein Benutzer kann hierher mit der Hand angreifen.

Die von der Erfindung vorgeschlagene Einrichtung zum Installieren von Sanitärelementen, insbesondere Sanitärarmaturen, wird folgendermaßen verwendet. Aus den Plänen oder an Ort und Stelle wird der Abstand zwischen der Rückseite der Trockenbauwand und der Vorderseite der Verfliesung gemessen. Dann wird der Flansch 8 derart mit dem Unterputzkasten verbunden, dass der Abstand zwischen dem Rand 4 des Unterputzkastens und der Vorderseite 9 des Flanschs 8 diesem Maß entspricht. Diese Vorgehensweise entspricht dem Zustand, dass die Vorderseite 9 des Flanschs 8 an der Rückseite einer solchen Trockenbauwand anlegen soll.

Im umgekehrten Falle, wenn nämlich die Rückseite des Flanschs 8 an der Vorderseite der Trockenbauwand anlegen soll, wird entsprechend ähnlich vorgegangen. Die Erfindung macht eine vor der Montage erfolgende Einstellung des Überstands des Unterputzkastens möglich. Dadurch verringert sich der Aufwand an der Installationsstelle selbst.

Figur 9 zeigt einen Detailschnitt durch eine Öse 2 mit einem eingesetzten dübelartigen Ansatz 16. Der dübelartige Ansatz 16 weist an seiner Außenseite eine umlaufende Nut auf, die dazu dienen kann, ein Einschnappen und damit Verriegeln des Ansatzes 16 in der Öse 2 zu bewerkstelligen.

Da der Ansatz 16 innen hohl ist, ist es auch möglich, ihn in der dargestellten Position dadurch zu sichern, dass von der Rückseite, also in Figur 9 von unten, eine Blechschraube eingeschraubt wird. Diese schneidet sich ihr Gewinde in dem Kunststoffmaterial selbst.

Über die Unterseite der Öse 2 überstehende Teile der Ansätze 16 können vorher mit einem Messer oder einer Säge abgetrennt werden.

Bei der Darstellung der Figur 4 und 5 sind die Ansätze an der Rückseite des Flanschs 8 in diejenigen Ösen. 2 eingesetzt, die normalerweise auch zur Befestigung des Unterputzkastens dienen können. Es ist ebenfalls möglich und liegt im Rahmen der Erfindung, dass an dem Unterputzkasten zusätzliche Ösen angebracht sind, die nur zur Befestigung der Ansätze dienen. Damit bleiben dann die üblichen Ösen 2 zur Befestigung des Unterputzkastens selbst noch frei und können ihre bisherige Funktion beibehalten.

Eine weitere Möglichkeit zur Ausgestaltung der von der Erfindung vorgeschlagenen Installationseinrichtung besteht darin, dass von der Vorderseite des Flanschs 8 her Schrauben durch die hohlen Ansätze 16 hindurch gesteckt werden können, mit denen dann der gesamte Kasten an einer Untergrundkonstruktion angeschraubt werden kann.

## Patentansprüche

1. Installationseinrichtung für Sanitärelemente, mit
1.1 einem Unterputzkasten (1), der
1.1.1 eine offene Vorderseite mit einem Rand (4),
1.1.2 Seitenwände und
1.1.3 gegebenenfalls einen Boden aufweist,
1.2 Mitteln zum Anbringen von Sanitärelementen in dem Unterputzkasten (1),
1.3 einem Flansch (8) an der Außenseite des Kastens (1), sowie mit
1.4 Festlegemitteln zum Festlegen des Flanschs (8) an dem Kasten (1) in einem bestimmbaren Abstand von dem Rand (4) der Vorderseite
**daduch gekennzeichnet, dass**
1.5 der Flansch (8) mit dem Unterputzkasten (1) verschraubt wird.

2. Installationseinrichtung für Sanitärelemente, mit
2.1 einem Unterputzkasten (1), der
2.1.1 eine offene Vorderseite mit einem Rand (4),
**2.1.2 Seitenwände und**
2.1.3 gegebenenfalls einen Boden aufweist,
2.2 Mitteln zum Anbringen von Sanitärelementen in dem Unterputzkasten (1),
2.3 einem Flansch (8) an der Außenseite des Kastens (1), sowie mit
2.4 Festlegemitteln zum Festlegen des Flanschs (8) an dem Kasten (1) in einem bestimmbaren Abstand von dem Rand (4) der Vorderseite
**daduch gekennzeichnet, dass**
2.5 die Verbindung zwischen dem Unterputzkasten (1) und dem Flansch (8) mit Hilfe mindestens einer Bajonettverbindung erfolgt.

3. Installationseinrichtung nach Anspruch 1 oder 2, bei der der Flansch (8) ein einteilig ausgebildeter Ring (7) ist.

4. lnstallationseinrichtung nach einem der vorhergehenden Ansprüche, bei der der Flansch (8) mit den Außenseiten der Seitenwände verbindbar ist.

5. Installationseinrichtung nach einem der vorhergehenden Ansprüche, bei der die Verbindung zwischen dem Unterputzkasten (1) und dem Flansch (8) direkt erfolgt.

6. Installationseinrichtung nach einem der vorhergehenden Ansprüche, bei der die Außenseite der Seitenwände und gegebenenfalls die Innenseite (11) des Flanschs (8) ein Gewinde bzw. eine steigungslose gewindeartige Verrippung aufweist.

7. Installationseinrichtung nach Anspruch 6, bei der das Gewinde bzw. die Verrippung an mindestens einer Stelle (6) des Umfangs bis auf mindestens den Grund des Gewindes bzw. der Verrippung unterbrochen ist.

8. Installationseinrichtung nach Anspruch 1, bei der die Verbindung zwischen dem Unterputzkasten (1) und dem Flansch (8) mit Hilfe mindestens einer Bajonettverbindung erfolgt.

9. Installationseinrichtung nach einem der vorhergehenden Ansprüchen 1, 3, 4 oder 5, bei der die. Verbindung zwischen dem Unterputzkasten (1) und dem Flansch (8) unter Verwendung von an dem Unterputzkasten (1) vorhandenen Anbauösen (2) erfolgt.

10. lnstallationseinrichtung nach einem der vorhergehenden Ansprüche, bei der die Befestigung des Flanschs (8) an dem Unterputzkasten (1) von der offenen Vorderseite des Unterputzkastens (1) her erfolgen kann.

11. Installationseinrichtung nach einem der vorhergehenden Ansprüche, bei der zur Montage des Unterputzkastens (1) der Flansch (8) zur Anlage an der Rückseite einer Trockenbauwand ausgebildet ist.

12. Installationseinrichtung nach einem der Ansprüche 1 bis 10, bei der zur Montage des Unterputzkastens (1) der Flansch (8) zur Anlage an der Vorderseite einer Wand ausgebildet ist.

13. lnstallationseinrichtung nach einem der vorhergehenden Ansprüche, bei der der befestigte Flansch (8) in seiner Position verriegelbar ist.

## Claims

1. An installation device for plumbing elements having
1.1 a flush-mounting box (1) that has
1.1.1 an open front having an edge (4),
1.1.2 side walls, and,
1.1.3 if desired, a base,
1.2 means for installing plumbing elements within the flush-mounting box (1),
1.3 a flange (8) on the outside of the box (1), and
1.4 means for fastening the flange (8) to the box (1) at a certain distance from its front edge (4)
**characterised in that**
1.5 the flange (8) is screwed together with the box (1).

2. An installation device for plumbing elements having
2.1 a flush-mounting box (1) that has
2.1.1 an open front having an edge (4),
2.1.2 side walls, and,
2.1.3 if desired, a base,
2.2 means for installing plumbing elements within the flush-mounting box (1),
2.3 a flange (8) on the outside of the box (1), and
2.4 means for fastening the flange (8) to the box (1) at a certain distance from its front edge (4)
**characterised in that**
2.5 the connection between the flush-mounting box (1) and the flange (8) occurs at least with the help of a bayonet joint.

3. An installation device according to claim 1 or 2, wherein the flange (8) is a ring (7) formed as a single-piece.

4. An installation device according to one of the preceding claims, wherein the flange (8) may be connected with the outer surfaces of the side walls.

5. An installation device according to one of the preceding claims, wherein the connection between the flush-mounting box (1) and the flange (8) is direct.

6. An installation device according to one of the preceding claims, wherein the outer surface of the side walls and, if desired, the inner surface (11) of the flange (8), has a thread or a rib having 0° pitch angle that resembles a thread.

7. An installation device according to claim 6, wherein the thread or rib is interrupted at least at one location (6) on the circumference at least down to the base of the thread or rib.

8. An installation device according to claim 1, wherein the joint between the flush-mounting box (1) and the flange (8) involves at least one bayonet joint.

9. An installation device according to one of the preceding claims 1, 3, 4 or 5, wherein the joint between the flush-mounting box (1) and the flange (8) employs mounting eyes (2) on the flush-mounting box (1).

10. An installation device according to one of the preceding claims, wherein the installation of the flange (8) on the flush-mounting box (1) can take place from the open front side of the flush-mounting box (1).

11. An installation device according to one of the preceding claims, wherein for the installation of the flush-mounting box (1), the flange (8) is made to lie on the rear side of a drywall.

12. An installation device according to one of claims 1 - 10, wherein for the installation of the flush-mounting box (1), the flange (8) is made to lie on the front side of a wall.

13. An installation device according to one of the preceding claims, wherein the fixed flange (8) may be latched in position.

## Revendications

1. Dispositif d'installation pour éléments sanitaires, comprenant
1.1 une boîte d'encastrement sous crépi (1) qui
1.1.1 présente un côté avant ouvert muni d'un bord (4),
1.1.2 des parois latérales et
1.1.3 éventuellement un fond,
1.2 des moyens destinés à installer des éléments sanitaires dans la boîte d'encastrement sous crépi (1),
1.3 une bride (8) sur le côté extérieur de la boîte (1) ainsi que
1.4 des moyens de fixation destinés à fixer la bride (8) sur la boîte (1) à un écart déterminable du bord (4) du côté avant
**caractérisé en ce que**
1.5 la bride (8) est vissée avec la boîte d'encastrement sous crépi (1).

2. Dispositif d'installation pour éléments sanitaires, comprenant
2.1 une boîte d'encastrement sous crépi (1) qui
2.1.1 présente un côté avant ouvert muni d'un bord (4),
2.1.2 des parois latérales et
2.1.3 éventuellement un fond,
2.2 des moyens destinés à installer des éléments sanitaires dans la boîte d'encastrement sous crépi (1),
2.3 une bride (8) sur le côté extérieur de la boîte (1) ainsi que
2.4 des moyens de fixation destinés à fixer la bride (8) sur la boîte (1) à un écart déterminable du bord (4) du côté avant
**caractérisé en ce que**
2.5 le raccordement entre la boîte d'encastrement sous crépi (1) et la bride (8) est réalisé à l'aide d'au moins un raccord à baïonnette.

3. Dispositif d'installation selon la revendication 1 ou 2, dans lequel la bride (8) est une bague (7) exécutée d'une seule pièce.

4. Dispositif d'installation selon l'une quelconque des revendications précédentes, dans lequel la bride (8) est raccordable aux côtés extérieurs des parois latérales.

5. Dispositif d'installation selon l'une quelconque des revendications précédentes, dans lequel le raccordement entre la boîte d'encastrement sous crépi (1) et la bride (8) est réalisé directement.

6. Dispositif d'installation selon l'une quelconque des revendications précédentes, dans lequel le côté extérieur des parois latérales et éventuellement le côté intérieur (11) de la bride (8) présentent un filetage ou une nervure semblable à un filetage sans pas.

7. Dispositif d'installation selon la revendication 6, dans lequel le filetage ou la nervure est interrompu(e) à au moins un endroit (6) de la circonférence au moins jusqu'au fond du filetage ou de la nervure.

8. Dispositif d'installation selon la revendication 1, dans lequel le raccordement entre la boîte d'encastrement sous crépi (1) et la bride (8) est réalisé à l'aide d'au moins un raccord à baïonnette.

9. Dispositif d'installation selon l'une quelconque des revendications précédentes 1, 3, 4 ou 5, dans lequel le raccordement entre la boîte d'encastrement sous crépi (1) et la bride (8) est réalisé en utilisant des oeillets de montage (2) présents sur la boîte d'encastrement sous crépi (1).

10. Dispositif d'installation selon l'une quelconque des revendications précédentes, dans lequel la fixation de la bride (8) sur la boîte d'encastrement sous crépi (1) peut être réalisée depuis le côté avant ouvert de la boîte d'encastrement sous crépi (1).

11. Dispositif d'installation selon l'une quelconque des revendications précédentes, dans lequel, pour le montage de la boîte d'encastrement sous crépi (1), la bride (8) est exécutée pour venir s'appliquer au dos d'une cloison en construction sèche.

12. Dispositif d'installation selon l'une quelconque des revendications précédentes 1 à 10, dans lequel, pour le montage de la boîte d'encastrement sous crépi (1), la bride (8) est exécutée pour venir s'appliquer sur le côté avant d'une cloison.

13. Dispositif d'installation selon l'une quelconque des revendications précédentes, dans lequel la bride (8) fixée peut être verrouillée dans sa position.
